# EUROPEAN PATENT APPLICATION

(11) **EP 1 221 779 A2**
(43) Date of publication of application: **10.07.2002**
(21) Application number: 01126013.0
(22) Date of filing: 31.10.2001
(51) Int. Cl.: H04J 14/02, H04B 10/24, H04B 10/18

(54) **Bidirectional wdm add/drop multiplexer and bidirectional wdm optical transmission system having the same**

(30) Priority: 09.01.2001 KR 2001001074
(71) Applicant: SAMSUNG ELECTRONICS CO., LTD., Suwon-City, Kyungki-do (KR)
(72) Inventor: Joo, Young-Hoon, Yongin-shi, Kyonggi-do (KR); Oh, Yun-Je, Suwon-shi, Kyonggi-do (KR); Hwang, Seung-Taek, Pyeongtaek-shi, Kyonggi-do (KR); Kim, Seung-Ha c/o SAMSUNG ELEC.CO.LTD, Int.Prop.T., Suwon City, Kyungki-do, 442-742 (KR)
(74) Representative: Grünecker, Kinkeldey, Stockmair & Schwanhäusser Anwaltssozietät

(57) **Abstract**

A WDM optical transmission system with a bi-directional WDM-ADM is disclosed. The system includes first and second transceivers for multiplexing a multi-channel optical signal before transmission and for de-multiplexing a received multi-channel optical signal; and, a bi-directional WDM-ADM for interleaving the channels of an optical signal received from the first transceiver and the channels of an optical signal received from a second transceiver, for adding/dropping the interleaved optical signals according to channels, for deinterleaving the added/dropped optical signals into a first optical signal and a second optical signal, and for providing the first and the second optical signals to the first and second transceivers, respectively.

## Description

The present invention relates generally to a wavelength division multiplexing (WDM) transmission, and in particular, to a bi-directional WDM add/drop multiplexer and a bi-directional WDM optical transmission system having the same.

One way to transmit multiple channels is through wavelength division multiplexing (WDM), whereupon several wavelengths are transmitted in the same optical fiber. Here, each channel has its own wavelength, and all wavelengths are separated enough to prevent overlap. Consequently, an optical transmission system that employs the WDM scheme increases transmission efficiency, especially in exponential growth in the high-speed Internet traffic.

In a point-to-point connection-based optical communication network, it is very difficult to efficiently exchange optical signals between two points. To this end, an add/drop multiplexer (ADM) has been proposed to add new optical transmission signals and to drop only desired optical signals at a given node without requiring the photoelectric conversion.

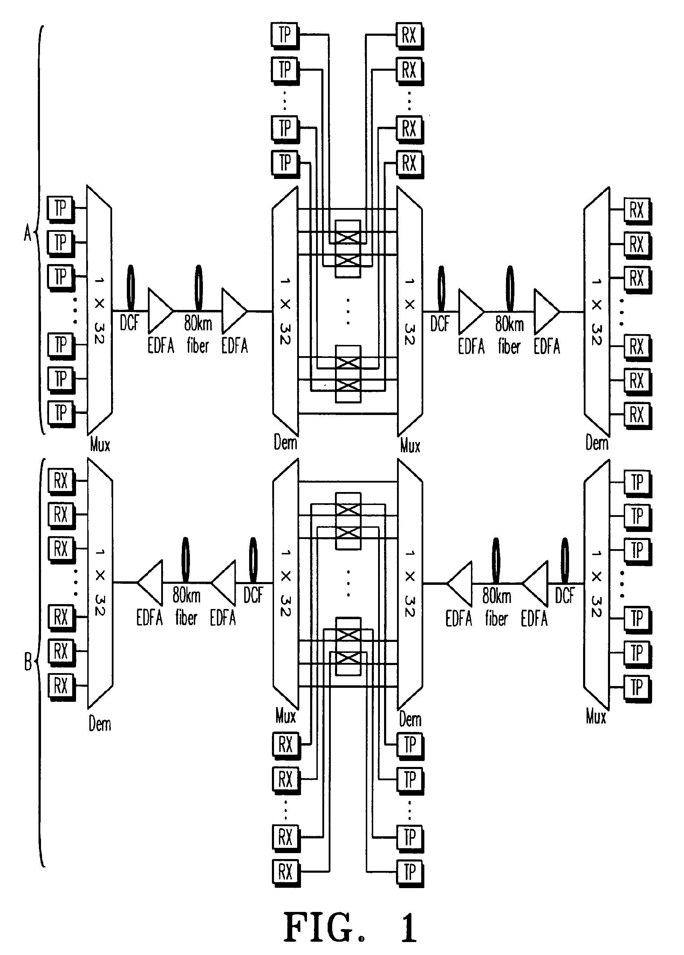

FIG. 1 illustrates the structure of a conventional unidirectional WDM-ADM optical transmission system. The conventional unidirectional WDM-ADM optical transmission system includes a unidirectional WDM-ADM, which can only add and drop optical signals proceeding in the same direction over the same optical fiber. That is, the unidirectional WDM-ADM demultiplexes (or separates) incoming WDM optical signals in one direction from a particular node using a demultiplexer (Dem) and then drops optical signals at another destined node. At the same time, the unidirectional WDM-ADM multiplexes (or combines) new optical signals from a particular node using a multiplexer (Mux), then forwards them to another node over the same optical fiber. In FIG. 1, the upper block represented by "A" represents the forward (west-to-east) unidirectional transmission, whereas the lower block represented by "B" represents the reverse (east-to-west) unidirectional transmission.

However, when the unidirectional WDM-ADM transmits optical signals over an optical band with a limited number of optical wavelengths, an interference occurs between neighboring channels. The unidirectional WDM-ADM can not send a relatively large number of optical channel signals over a single optical fiber. Hence, the unidirectional WDM-ADM requires at least two-pairs of optical fibers in order to send optical signals bi-directionally, thus doubling the number of optical fiber elements. In order to improve the utilization efficiency of the unidirectional WDM-ADM of FIG. 1 and increase the utilization efficiency of the optical fiber without increasing optical fiber components, a bi-directional WDM-ADM that is capable of transmitting optical signals bi-directionally over the same optical fiber has been introduced.

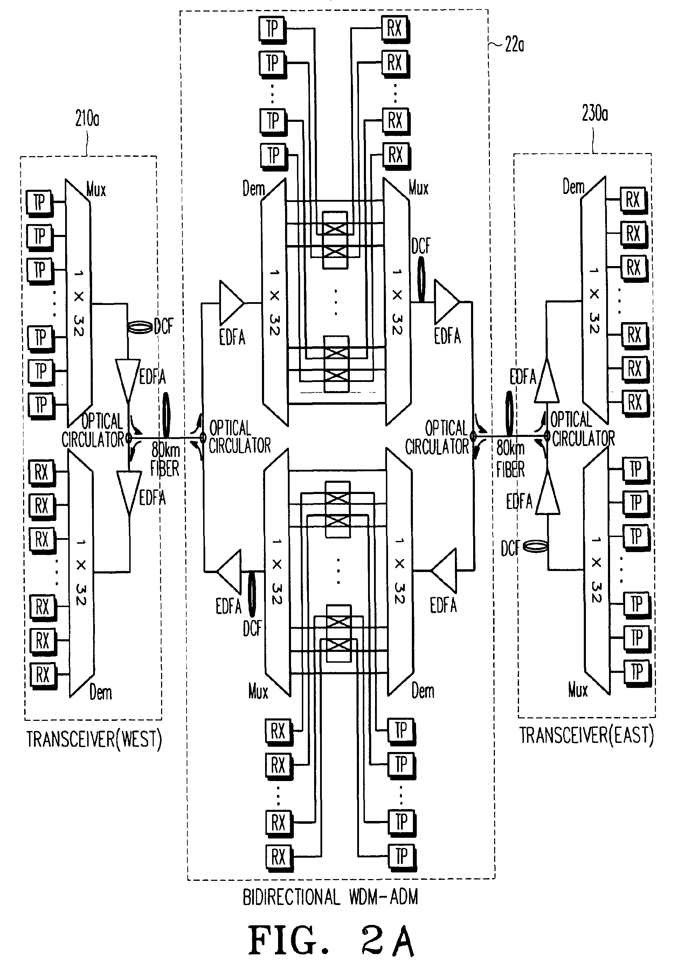

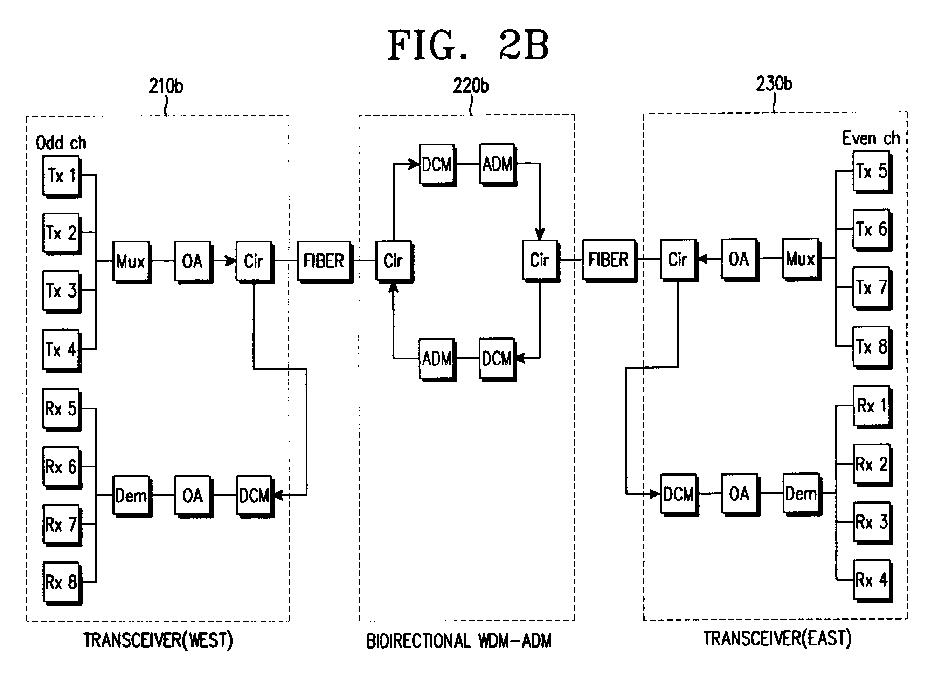

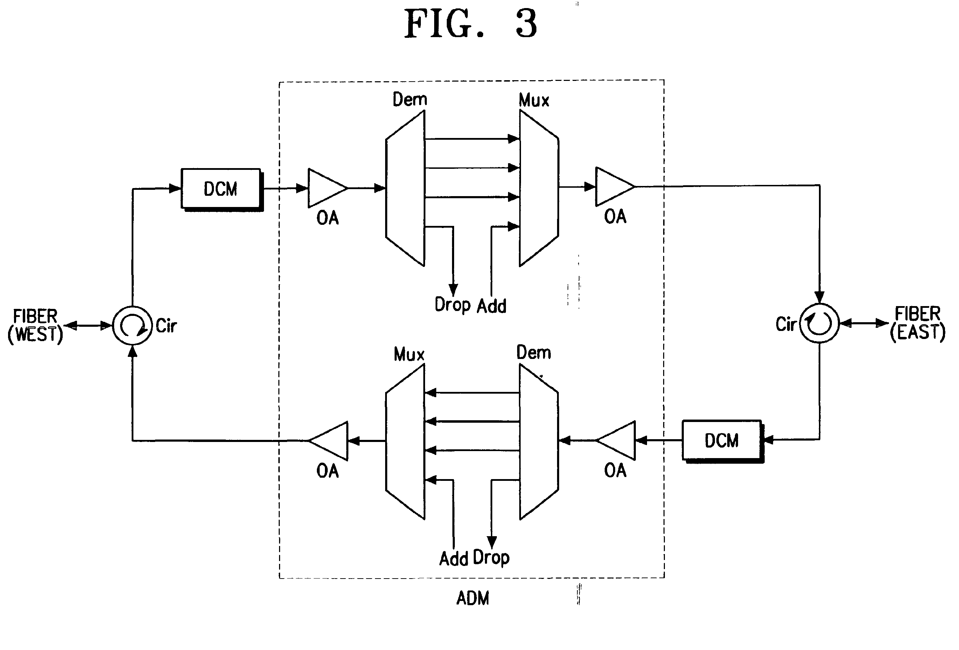

FIGs. 2A and 2B illustrate the structure of a conventional bi-directional WDM-ADM optical transmission system that is capable of transmitting optical signals over the same optical fiber, and FIG. 3 illustrates a detailed structure of a conventional bi-directional WDM-ADM. In operation, the bi-directional WDM-ADM de-multiplexes the bi-directional optical signals and processes the de-multiplexed signals just as the unidirectional WDM-ADM, while transmitting optical signals bi-directionally after multiplexing.

Referring to FIGs. 2A and 2B, the conventional bi-directional WDM optical transmission system includes West transceivers 210a (210b), East transceivers 230a (230b), and bi-directional WDM-ADMs 220a (220b). The transceivers 210a (210b) and 230a (230b) each include a plurality of transmission nodes TP (Tx), reception nodes (RX), a multiplexer (Mux) for multiplexing optical signals on the transmission nodes TP (Tx), and an optical circulator (Cir) for setting an optical signal path so as to provide optical signals received through the optical fiber to a demultiplexer (Dem) and to provide optical transmission signals outputted from the multiplexer (Mux) to the optical fiber. In addition, transceivers 210a (210b) and 230a(230b) each include optical amplifiers (OA), or erbium doped fiber amplifiers (EDFA), for amplifying the attenuated multiplexed bi-directional optical transmission signals, and a dispersion compensation module (DCM), or a dispersion compensation fiber (DCF), for compensating color dispersion occurring in the optical fiber through which the high-speed optical transmission signal passes.

As shown in FIGs. 2A, 2B and 3, the bi-directional WDM-ADMs 220a (220b) each include optical circulators (Cir) for setting a forward (East) optical signal path or a reverse (West) optical signal path, and an add/drop multiplexer (ADM), comprised of two pairs of multiplexers (Mux) and de-multiplexers (Dem), for adding and dropping optical signals to/from the channels, wherein one pair is situated in the east end and another pair is situated in the west end. In the ADM, the output nodes of the multiplexers (Mux) and the input nodes of the demultiplexers (Dem) are commonly connected to the associated optical fiber amplifiers EDFA. In addition, the bi-directional WDM-ADM 220a (220b) also include the dispersion compensation modules DCM (or DCF) in both the East side and the West side.

In the conventional bi-directional WDM-ADM optical transmission system, an optical fiber bi-directionally transmits optical signals between the transceivers 210a (210b), 230a (230b) via the bi-directional WDM-ADMs 220a (220b). Hence, unlike the unidirectional WDM-ADM optical transmission system of FIG. 1, the bi-directional WDM-ADM optical transmission system can share the same optical fiber. However, when compared with the unidirectional WDM-ADM of FIG. 1, the bi-directional WDM-ADMs 220a (220b) must separately include a plurality of optical circulators to control the optical signal paths, thus increasing the number of optical elements.

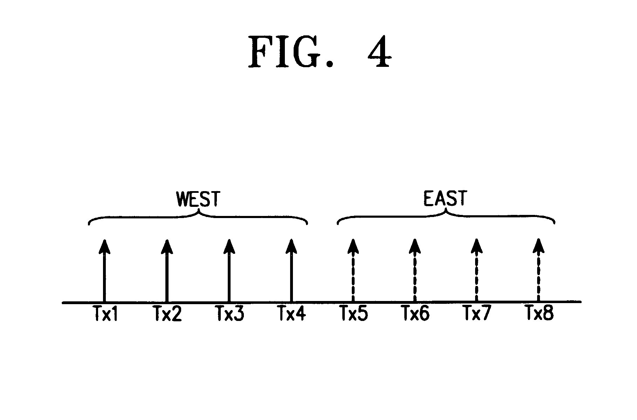

Furthermore, as shown in FIG. 4, the bi-directional WDM-ADM optical transmission system separately uses a lower wavelength band for the West optical signal transmission and a higher wavelength band for the East optical signal transmission. Therefore, the utilization efficiency of the wavelength band is not improved when compared to that of the unidirectional WDM-ADM.

The present invention is directed to providing a simple and highly efficient bi-directional WDM-ADM, and a bi-directional WDM optical transmission system having the same.

Accordingly, there is provided a bi-directional WDM optical transmission system, which includes first and second transceivers for multiplexing a multi-channel optical signal before transmission and demultiplexing a received multi-channel optical signal; and a bi-directional WDM-ADM for interleaving optical signal channels received from the first transceiver and optical signal channels received from a second transceiver, for adding/dropping the interleaved optical signals according to the channels, for de-interleaving the added/dropped optical signals into a first optical signal and a second optical signal, and for providing the first and the second optical signals to the first and second transceivers, respectively.

Preferably, the WDM-ADM comprises a first interleaver for interleaving the forward optical signal received at a first node and the reverse optical signal received at a second node, and for outputting the interleaved optical signals to a third node; an add/drop multiplexer for adding or dropping a selected channel to/from the interleaved optical signals that are outputted from the first interleaver; and, a second interleaver for de-interleaving the optical signals received at a third node from the add/drop multiplexer into forward and reverse optical signals according to the channels and for outputting the de-interleaved forward optical signal and the reverse optical signal to the second and first nodes, respectively.

Furthermore, the inventive WDM-ADM comprises the first and second optical amplifiers provided to an input node and an output node of the add/drop multiplexer, respectively,and,a color dispersion compensation module provided between the third node of the first interleaver and the input node of the add/drop multiplexer.

The above and other features and advantages of the present invention will become more apparent from the following detailed description when taken in conjunction with the accompanying drawings in which:
FIG. 1 is a diagram illustrating the structure of a conventional unidirectional WDM-ADM optical transmission system;
FIGs. 2A and 2B are diagrams illustrating the structure of a conventional bi-directional WDM-ADM optical transmission system;
FIG. 3 is a diagram illustrating the structure of a conventional bi-directional WDM-ADM;
FIG. 4 is a diagram illustrating the wavelength distribution of a conventional bi-directional WDM-ADM;
FIGs. 5A and 5B are diagrams illustrating the structure of a bi-directional WDM-ADM optical transmission system according to an embodiment of the present invention;
FIG. 6 is a diagram illustrating the structure of a bi-directional WDM-ADM according to an embodiment of the present invention; and,
FIG. 7 is a diagram illustrating wavelength distribution of the bi-directional WDM-ADM according to an embodiment of the present invention.

A preferred embodiment of the present invention will be described hereinbelow with reference to the accompanying drawings. For the purpose of clarity, well-known functions or constructions are not described intricately as they would obscure the invention in unnecessary detail.

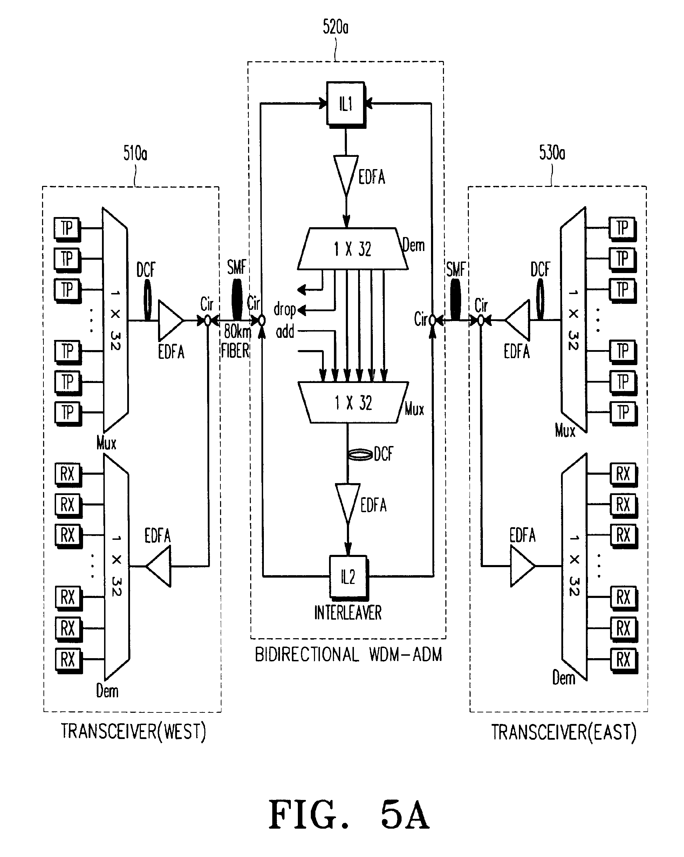

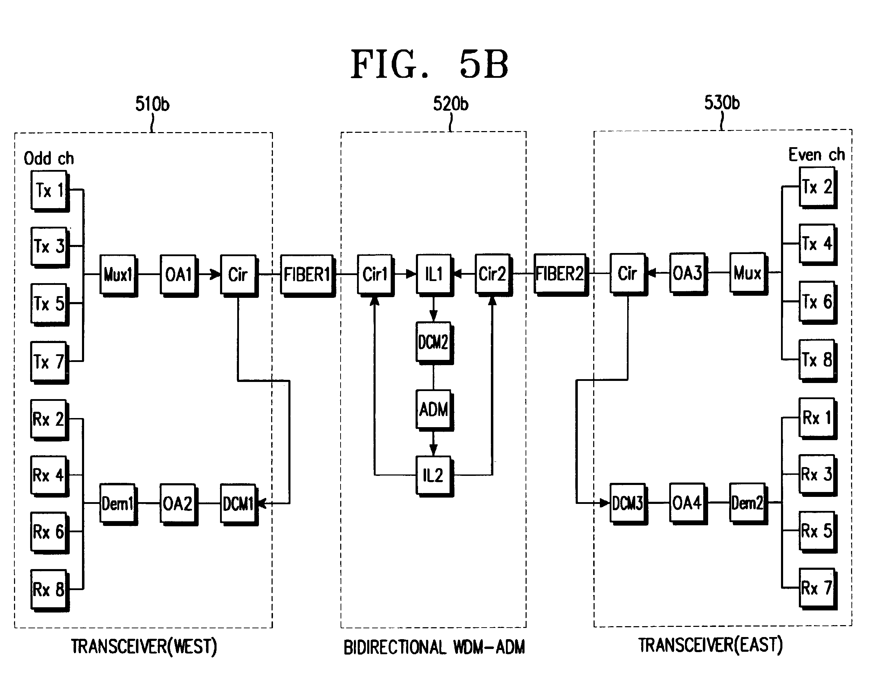

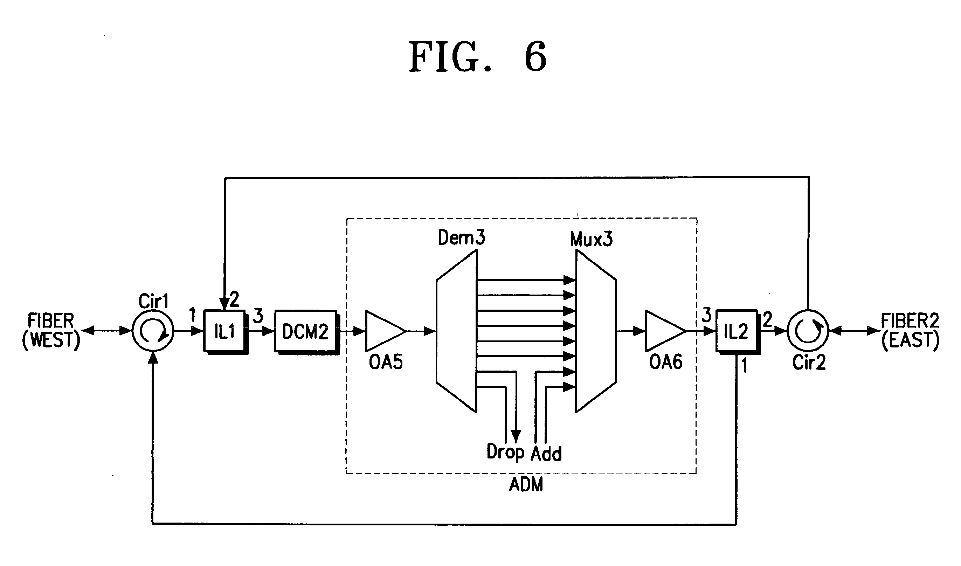

FIGs. 5A and 5B illustrate the structure of a bi-directional WDM-ADM optical transmission system according to an embodiment of the present invention, and FIG. 6 illustrates a simplified block diagram of a bi-directional WDM-ADM according to an embodiment of the present invention. Referring first to FIGs. 5A and 5B, the bi-directional WDM-ADM optical transmission system, according to the present invention, includes West transceivers 510a and 510b, East transceivers 530a and 530b, and bi-directional WDM-ADMs 520a and 520b. Each of the transceivers 510a, 510b, 530a and 530b includes a plurality of transmission nodes (TP and Tx) and reception nodes (RX), a multiplexer (Mux) for multiplexing optical signals on the transmission nodes (TP and Tx), and an optical circulator (Cir) for setting an optical signal path to provide an optical signal received through the optical fiber to a demultiplexer (Dem) and to provide an optical transmission signal output from the multiplexer (Mux) to the optical fiber. In addition, each of the transceivers 510a, 510b, 530a and 530b also includes optical amplifiers (OA), or erbium doped fiber amplifiers (EDFA), for amplifying the attenuated multiplexed bi-directional optical transmission signal, and a dispersion compensation module (DCM), or a dispersion compensation fiber (DCF), for compensating color dispersion occurring in the optical fiber through which the high-speed optical transmission signal passes.

As shown in FIGs. 5A, 5B and 6, the bi-directional WDM-ADMs 520a and 520b according to the present invention each include optical circulators (Cir1 and Cir2) for switching optical signal paths of the respective input nodes to associated output nodes, and an add/drop multiplexer (ADM), comprised of a multiplexer (Mux) and a demultiplexer (Dem), for adding and dropping a desired optical signal. In the ADM, the output node of the multiplexer (Mux) and the input node of the demultiplexer (Dem) are connected to the associated optical fiber amplifiers (EDFA). In addition, the bi-directional WDM-ADMs 520a and 520b, according to the present invention, also include dispersion compensation modules (DCM) (or DCF) in both the East side and the West side.

Moreover, the bi-directional WDM-ADM 520a and 520b include interleavers (IL1 and IL2), whereby each interleaves optical signals received through the first and second nodes according to the wavelength and outputs the interleaved optical signals to a third node, thereby reducing the interval between the adjacent channels. Furthermore, each of the interleavers (IL1 and IL2) de-interleaves optical signals received at the third node according to the wavelengths and outputs the de-interleaved optical signals to the first and second nodes.

In the bi-directional WDM-ADMs 520a and 520b, according to the present invention, an optical signal received from a first direction (West) is applied to the first node of the first interleaver (IL1) through the first optical circulator (Cir1), while an optical signal received from a second direction (East) is applied to the second node of the first interleaver (IL1) through the second optical circulator (Cir2). The first interleaver (IL1) interleaves the optical signals received at its first and second nodes according to the wavelength and provides the interleaved optical signals to the ADM through its third node. The output of the ADM is applied to the third node of the second interleaver (IL2). The second interleave IL2 then de-interleaves the optical signals received at its third node according to the wavelength and outputs the de-interleaved optical signals to the first and second optical circulators (Cir1 and Cir2) through its first and second nodes, respectively, as the optical signals traverse in different directions.

Now, the operation of the bi-directional WDM-ADMs 520a and 520b according to the present invention will be described in more detail with reference to FIGs. 5B and 6. In the bi-directional WDM-ADM optical transmission system, according to the present invention, the odd-numbered optical signals Tx1, Tx3, Tx5, and Tx7 outputted from the left (West) transceiver 510b are applied to the first optical circulator (Cir1) of the bi-directional WDM-ADM 520b through the first multiplexer (Mux1), the optical circulator (Cir), and the optical fiber Fiber1. Similarly, the even-numbered optical signals Tx2, Tx4, Tx6, and Tx8 output from the right (East) transceiver 530b are applied to the second optical circulator (Cir2) of the bi-directional WDM-ADM 520b through the second multiplexer (Mux2), the optical circulator (Cir), and the optical fiber Fiber2.

In the bi-directional WDM-ADM 520b, the optical signals output from the West transceiver 510b are provided to the first node of the first interleaver (IL1) through the first optical circulator (Cir1), while the optical signals output from the East transceiver 530b are provided to the second node of the first interleaver (IL1) through the second optical circulator (Cir2).

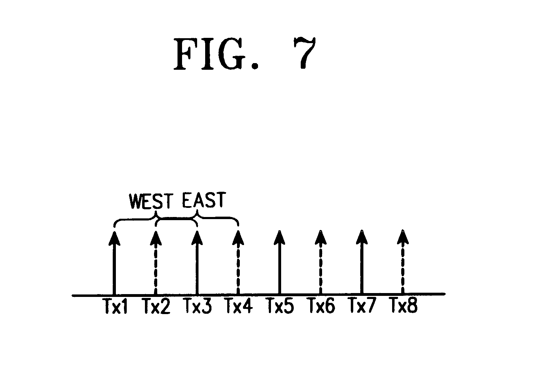

The first interleaver IL1 interleaves the optical signals with odd-numbered wavelengths, received at the first node, into the optical signals with even-numbered wavelengths, received at the second node, as shown in FIG. 7, and provides the interleaved optical signals to the ADM through the dispersion compensation module DCM2.

Referring to FIG. 5a, in the ADM, the input optical signals are amplified by an optical amplifier EDFA (OA5) and then de-multiplexed by a multiplexer (Dem3) according to the wavelength. Among the de-multiplexed optical signals, the optical signals desired at the node are dropped, and the remaining optical signals and the newly added optical signals are multiplexed by the multiplexer (Mux3 ) and then outputted to the third node of the second interleaver (IL2) through an optical amplifier EDFA (OA6).

The optical signals received at the third node of the second interleaver (IL2) are de-interleaved into the odd-numbered channels and the even-numbered channels. The odd-numbered channels are provided to the East transmitting optical fiber (Fiber2) through the second node of the second interleaver (IL2) and the second optical circulator (Cir2), while the even-numbered channels are provided to the West transmitting optical fiber (Fiber1) through the first node of the second interleaver (IL2) and the first optical circulator (Cir1).

Thereafter, the odd-numbered channels arrive at the de-multiplexer (Dem2) of the East transceiver 530b through the optical circulator (Cir), the dispersion compensation module (DCM3) and the optical amplifier (OA4), then are de-multiplexed by the demultiplexer (Dem2) according to the wavelength. The de-multiplexed odd-numbered channels are provided to the odd-numbered reception nodes Rx1, Rx3, Rx5, and Rx7, respectively. Similarly, the even-numbered channels arrive at the de-multiplexer (Dem1) of the West transceiver 510a through the optical circulator (Cir), the dispersion compensation module (DCM1), and the optical amplifier (OA2), then are de-multiplexed by the demultiplexer (Dem1) according to the wavelength. The de-multiplexed even-numbered channels are provided to the even-numbered reception nodes Rx2, Rx4, Rx6, and Rx8, respectively.

As described above, the novel bi-directional WDM-ADM optical transmission system, according to the present invention, can increase the transmission efficiency within the optical fiber by supporting bi-directional transmission utilizing a simple structure compared to the conventional bi-directional WDM-ADM optical transmission system. Although the inventive optical transmission system additionally includes the interleavers, it has reduced a number of the color dispersion compensation modules DCM, the optical amplifiers OA, the multiplexers (Mux), and the demultiplexers (Dem) when compared to the prior art sytsem, thus contributing to reducedcost of the system. In addition, the inventive optical transmission system interleaves the wavelengths progressing in one direction into the wavelengths progressing in another direction, thereby reducing the wavelength band by half. Therefore, the novel optical transmission system has high wavelength utilization efficiency. Furthermore, although it supports bi-directional transmission, the novel optical transmission system uses the unidirectional optical amplifier instead of the complex unidirectional optical amplifier, thus contributing to the system stabilization.

## Claims

1. A bi-directional add/drop multiplexer (ADM) for transmitting a wavelength division multiplexed signal (WDMS) through an optical fiber in both forward and reverse directions at each node in a WDM network system, the ADM comprising,
a means for adding and dropping bidirectional signals;
wherein the channels of said forward direction and said reverse direction are interleaved, said interleaved optical signals are added/dropped according to channels, and said added/dropped bi-directional signals are de-interleaved into a forward optical signal and a reverse optical signal.

2. The bi-directional add/drop multiplexer as claimed in claim 1, further comprising:
a first interleaver having a first node, a second node, and a third node for interleaving said forward optical signal received at the first node and said reverse optical signal received at the second node, and for outputting said interleaved forward and reverse optical signals through the third node;
an add/drop multiplexer for adding and dropping a selected channel to/from the interleaved forward and reverse optical signals outputted from said first interleaver; and
a second interleaver having a fourth node and a fifth node for de-interleaving optical signals outputted from said add/drop multiplexer into said forward optical signal and said reverse optical signal according to the channels, and for outputting said de-interleaved forward optical signal and said de-interleaved reverse optical signal to the fourth and fifth nodes, respectively.

3. The bi-directional add/drop multiplexer as claimed in claim 2, further comprising:
a first optical circulator for providing said forward optical signal to the first node of said first interleaver and for providing said reverse optical signal outputted at the first node of said second interleaver to said optical fiber; and,
a second optical circulator for providing said reverse optical signal to the second node of said first interleaver and for providing said forward optical signal output at the fifth node of said second interleaver to said optical fiber.

4. The bi-directional add/drop multiplexer as claimed in claim 2 or 3, further comprising:
first and second optical amplifiers provided to an input node and an output node of said add/drop multiplexer, respectively; and
a dispersion compensation module, provided between the third node of said first interleaver and the input node of said add/drop multiplexer, for compensating color dispersion.

5. A bi-directional WDM optical transmission system comprising:
first and second transceivers for multiplexing a multi-channel optical signal before transmission and de-multiplexing a received multi-channel optical signal; and
a bi-directional WDM-ADM for interleaving optical signal channels received from said first transceiver and optical signal channels received from said second transceiver, for adding/dropping the interleaved optical signals according to channels, for de-interleaving the added/dropped optical signals into a first optical signal and a second optical signal, and providing the first and the second optical signals to said first and second transceivers, respectively.

6. The bi-directional WDM optical transmission system as claimed in claim 5,
wherein the WDM-ADM comprises:
a first interleaver having a first node, a second node, and a third node for interleaving said forward optical signal received at the first node and said reverse optical signal received at the second node, and for outputting said interleaved forward and reverse optical signals through the third node;
an add/drop multiplexer for adding and dropping a selected channel to/from the interleaved forward and reverse optical signals outputted from said first interleaver; and
a second interleaver having a fourth node and a fifth node for de-interleaving optical signals outputted from said add/drop multiplexer into said forward optical signal and said reverse optical signal according to the channels, and for outputting said de-interleaved forward optical signal and said de-interleaved reverse optical signal to the fourth and fifth nodes, respectively.

7. The bi-directional WDM optical transmission system as claimed in claim 6,
wherein the WDM-ADM comprises:
first and second optical amplifiers provided to an input node and an output node of the add/drop multiplexer, respectively; and
a dispersion compensation module provided between the third node of the first interleaver and the input node of the add/drop multiplexer, for compensating color dispersion.

8. The bi-directional WDM optical transmission system as claimed in claim 6 or 7, wherein the WDM-ADM comprises:
a first optical circulator for providing said forward optical signal to the first node of said first interleaver and for providing said reverse optical signal outputted at the first node of said second interleaver to said optical fiber; and,
a second optical circulator for providing said reverse optical signal to the second node of said first interleaver and for providing said forward optical signal output at the fifth node of said second interleaver to said optical fiber.
